# EUROPÄISCHE PATENTSCHRIFT

(11) **EP 2 577 103 B1**
(45) Veröffentlichungstag und Bekanntmachung des Hinweises auf die Patenterteilung: **06.11.2019**
(21) Anmeldenummer: 10787422.4
(22) Anmeldetag: 03.12.2010
(51) Int. Cl.: F16H 45/02, F16F 15/131, F16F 15/14

(54) **HYDRODYNAMISCHE KOPPLUNGSEINRICHTUNG, INSBESONDERE DREHMOMENTWANDLER**
HYDRODYNAMIC COUPLING DEVICE, IN PARTICULAR TORQUE CONVERTER
APPAREIL HYDRODYNAMIQUE DE COUPLAGE, EN PARTICULIER CONVERTISSEUR DE COUPLE.

(30) Priorität: 25.05.2010 DE 102010029255
(43) Veröffentlichungstag der Anmeldung: 10.04.2013
(73) Patentinhaber: ZF Friedrichshafen AG, 88046 Friedrichshafen (DE)
(72) Erfinder: DOEGEL, Thomas, 97688 Bad Kissingen (DE); HOFFELNER, Ingrid, 97478 Knetzgau (DE); KUEHNER, Michael, 74078 Heilbronn (DE); KOPP, Mathias, 96050 Bamberg (DE)
(86) Internationale Anmeldenummer: PCT/EP2010/068822
(87) Internationale Veröffentlichungsnummer: WO 2011/147487

(56) Entgegenhaltungen:
- DE-A1- 19 835 758
- DE-A1-102008 034 557
- DE-A1-102008 057 648
- US-A1- 2002 033 310
- US-A1- 2009 125 202
- US-B1- 6 231 472

## Beschreibung

Die vorliegende Erfindung betrifft eine hydrodynamische Kopplungseinrichtung, insbesondere hydrodynamischer Drehmomentwandler, wie sie beispielsweise im Antriebsstrang eines Fahrzeugs eingesetzt werden kann.

Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, in Drehmomentwandlern durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. Sogenannte Turbinentorsionsschwingungsdämpfer und Zweidämpferwandler sind Beispiele hierfür. Als drehzahladaptive Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Es ist die Aufgabe der vorliegenden Erfindung, eine hydrodynamische Kopplungseinrichtung bereitzustellen, welche eine verbesserte Verringerung von in einen Antriebsstrang eingeleiteten Drehungleichförmigkeiten erreicht.

Erfindungsgemäß wird diese Aufgabe gelöst durch eine Hydrodynamische Kopplungsanordnung, insbesondere Drehmomentwandler, umfassend eine mit Fluid gefüllte oder füllbare Gehäuseanordnung, ein mit der Gehäuseanordnung um eine Drehachse drehbares Pumpenrad, ein in der Gehäuseanordnung angeordnetes und mit einem Abtriebsorgan um die Drehachse drehbares Turbinenrad, eine Überbrückungskupplung zur Herstellung einer Drehmomentübertragungsverbindung zwischen der Gehäuseanordnung und dem Abtriebsorgan, eine Drehschwingungsdämpfungsanordnung mit einem Eingangsbereich und einem Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Bei der erfindungsgemäßen Drehschwingungsdämpfungsanordnung wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritischen Frequenzbereich eine nahezu vollständige Eliminierung der Drehungleichförmigkeiten statt.

Um diese Phasenverschiebung bei baulich einfacher Weise effizient erreichen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Die Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Um ein weiter verbessertes Schwingungsdämpfungsverhalten im Drehmomentübertragungsweg zu dem Abtriebsorgan erreichen zu können, wird vorgeschlagen, dass der Ausgangsbereich ein weiteres Schwingungssystem mit einer Primärseite und einer gegen die Wirkung einer Federanordnung bezüglich der Primärseite drehbaren Sekundärseite umfasst.

Bei einer besonders vorteilhaften Weiterbildung der vorliegenden Erfindung wird vorgeschlagen, dass das Turbinenrad an einen der Drehmomentübertragungswege angekoppelt ist. Somit wird es möglich, durch Ausnutzung der Masse des Turbinenrads den erfindungsgemäß auszunutzenden Überlagerungseffekt zu beeinflussen und mithin ein weiter verbessertes Dämpfungsverhalten zu erzielen.

Dabei ist es besonders vorteilhaft, wenn das Turbinenrad an den ersten Drehmomentübertragungsweg angekoppelt ist, vorzugsweise mit der Sekundärseite des Schwingungssystems im ersten Drehmomentübertragungsweg gekoppelt ist.

Um die direkte Drehmomentübertragungsverbindung zwischen der Gehäuseanordnung und dem Abtriebsorgan vermittels der Überbrückungskupplung herstellen bzw. aufheben zu können, kann beispielsweise vorgesehen sein, dass die Überbrückungskupplung wirkungsmäßig in einem der Drehmomentübertragungswege, vorzugsweise dem ersten Drehmomentübertragungsweg, angeordnet ist. Durch die Unterbrechung von einem der Drehmomentübertragungswege wird die Drehmomentenüberlagerung und mithin der gesamte Drehmomentenfluss über die Drehschwingungsdämpfungsanordnung unterbrochen.

Bei einer alternativen Variante kann vorgesehen sein, dass die Überbrückungskupplung wirkungsmäßig im Ausgangsbereich angeordnet ist. Hier kann also der Drehmomentenfluss durch Ausrücken der Überbrückungskupplung in einem Bereich unterbrochen werden, welcher zwischen der Kopplungsanordung und dem Abtriebsorgan liegt.

Bei einer weiteren alternativen Variante kann die Überbrückungskupplung wirkungsmäßig im Eingangsbereich angeordnet sein. Dies bedeutet, dass die Überbrückungskupplung den Drehmomentenfluss in einem Bereich zwischen der Gehäuseanordnung und demjenigen Bereich, in welchem das zu übertragende Drehmoment auf die beiden Drehmomentübertragungswege aufgeteilt wird, liegt bzw. wirkt.

Erfindungsgemäß umfasst die Kopplungsanordnung eine Planetengetriebeanordnung. Hierzu umfasst die Planetengetriebeanordnung einen an den zweiten Drehmomentübertragungsweg angebundenen Planetenradträger mit einer Mehrzahl von daran drehbar getragenen Planetenrädern. Es sei hier darauf hingewiesen, dass die Planetenräder als im Wesentlichen kreisrunde, also mit voll umlaufender Verzahnung ausgebildete Räder ausgebildet sein können, oder alternativ aber auch als Segmenträder ausgebildet sein können.

Um die Planetengetriebeanordnung bzw. deren Planetenräder zur Zusammenleitung der über die beiden Drehmomentübertragungswege geleiteten Drehmomente bzw. Drehmomentanteile in einfacher Weise nutzen zu können, umfasst die Planetengetriebeanordnung eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern.

Hierbei kann beispielsweise vorgesehen sein, dass die erste Koppelradanordnung in Verbindung mit den Planetenrädern und die zweite Koppelradanordnung in Verbindung mit den Planetenrädern zueinander gleiche Übersetzungsverhältnisse bereitstellen. Durch das Bereitstellen im Wesentlichen gleicher Übersetzungsverhältnisse kann erreicht werden, dass die über die beiden Drehmomentübertragungswege geleiteten Drehmomentenanteile des gesamt zu übertragenden Drehmoments im Wesentlichen gleich groß sind.

Eine Beeinflussung der über die beiden Drehmomentübertragungswege zu übertragenden Drehmomente bzw. Drehmomentanteile in dem Sinne, dass diese nicht gleich zueinander sind, kann dadurch erfolgen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Die erste Koppelradanordnung und die zweite Koppelradanordnung können jeweils als Hohlradanordnung ausgebildet sein, also mit den Planetenrädern in deren radial äußeren Bereich zusammenwirken. Alternativ kann vorgesehen sein, dass die erste Koppelradanordnung und die zweite Koppelradanordnung jeweils eine Sonnenradanordnung umfasst.

Zur weiteren Beeinflussung des Schwingungsdämpfungsverhaltens kann vorgesehen sein, dass das Schwingungssystem oder/und das weitere Schwingungssystem wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem oder/und das weitere Schwingungssystem wenigstens zwei zueinander parallel wirksame Schwingungsdämpfer jeweils mit einer Primärseite und einer bezüglich dieser drehbaren Sekundärseite umfasst.

Wenn das Schwingungssystem oder/und das weitere Schwingungssystem eine drehzahladaptive Schwingungsdämpfungsanordnung mit wenigstens einer in Umfangsrichtung aus einer Grundlage auslenkbaren und dabei ihren Abstand zur Drehachse verändernde Auslenkungsmasse umfasst, wird es weiter möglich, das Schwingungsdämpfungsverhalten in der erfindungsgemäß aufgebauten hydrodynamischen Kopplungseinrichtung an spezielle Anregungsfrequenzen bzw. Ordnungen derselben anzupassen.

Bei einer alternativen Ausgestaltungsvariante kann dies dadurch erreicht werden, dass das Schwingungssystem oder/und das weitere Schwingungssystem eine Festfrequenz-Schwingungsdämpfungsanordnung mit wenigstens einer gegen die Wirkung einer Rückstellfederanordnung auslenkbaren Schwingungsmasse umfasst.

Weiter kann das Schwingungsdämpfungsverhalten dadurch vorteilhaft beeinflusst werden, dass dem Schwingungssystem oder/und dem weiteren Schwingungssystem eine einer Relativdrehung zwischen Primärseite und Sekundärseite desselben entgegenwirkende Reibungsdämpfungsanodnung zugeordnet ist.

Die vorliegende Erfindung wird nachfolgend mit Bezug auf die beiliegenden Figuren detailliert erläutert. Es zeigt:
- Fig. 1: eine prinzipartige Längsschnittdarstellung einer hydrodynamischen Kopplungseinrichtung;
- Fig. 2: eine Teil-Längsschnittdarstellung einer konstruktiven Ausführung der in Fig. 1 dargestellten Kopplungseinrichtung;
- Fig. 3: eine der Fig. 1 entsprechende Darstellung einer alternativen Ausgestaltungsform;
- Fig. 4: eine Teil-Längsschnittdarstellung einer konstruktiven Ausführung der in Fig. 3 gezeigten Kopplungseinrichtung;
- Fig. 5: eine Teil-Längsschnittdarstellung einer konstruktiven Ausführung der in Fig. 3 gezeigten Kopplungseinrichtung;
- Fig. 6: eine Teil-Längsschnittdarstellung einer konstruktiven Ausführung der in Fig. 3 gezeigten Kopplungseinrichtung;
- Fig. 7: eine weitere der Fig. 1 entsprechende Darstellung einer alternativen Ausgestaltungsart;
- Fig. 8: eine Teil-Längsschnittdarstellung einer konstruktiven Ausführung der in Fig. 7 gezeigten Kopplungseinrichtung;
- Fig. 9: eine weitere der Fig. 1 entsprechende Darstellung einer alternativen Ausgestaltungsart;
- Fig. 10: eine weitere der Fig. 1 entsprechende Darstellung einer alternativen Ausgestaltungsart;
- Fig. 11: eine weitere der Fig. 1 entsprechende Darstellung einer alternativen Ausgestaltungsart;
- Fig. 12: eine weitere der Fig. 1 entsprechende Darstellung einer alternativen Ausgestaltungsart; und
- Fig. 13: eine weitere der Fig. 1 entsprechende Darstellung einer alternativen Ausgestaltungsart.

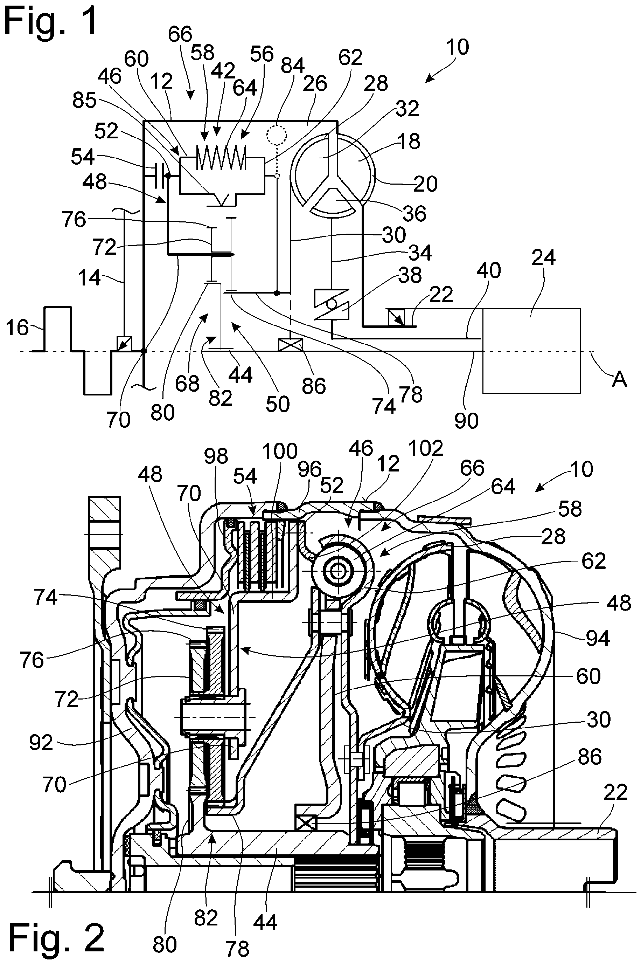

In Fig. 1 ist eine hydrodynamische Kopplungseinrichtung 10 in Form eines hydrodynamischen Drehmomentwandlers realisiert. Die Kopplungseinrichtung 10 umfasst ein Gehäuse 12, welches an ein Antriebsaggregat, beispielsweise eine nur symbolisch angedeutete Brennkraftmaschine 14 bzw. deren Kurbelwelle 16, angekoppelt und somit um eine Drehachse A drehbar ist. An einer Innenseite des Gehäuses 12 sind in Umfangsrichtung aufeinander folgend Pumpenradschaufeln 18 vorgesehen, so dass ein mit dem Gehäuse 12 um die Drehachse A drehbares Pumpenrad 20 bereitgestellt ist. Eine durch das Gehäuse 12 bereitgestellte Pumpennabe 22 ist in ein Getriebe 24 eingreifend positioniert und kann im Rotationsbetrieb des Gehäuses 12 eine im Getriebe 24 vorgesehene Fluid- bzw. Ölpumpe antreiben.

Im Innenraum 26 des Gehäuses 12 ist ein allgemein mit 28 bezeichnetes Turbinenrad angeordnet. Dieses umfasst eine Turbinenradschale 30 und eine Mehrzahl daran getragener und den Pumpenradschaufeln 18 axial gegenüberliegender Turbinenradschaufeln 32. Axial zwischen dem Pumpenrad 20 und dem Turbinenrad 28 ist ein Leitrad 34 mit seinen Leitradschaufeln 36 angeordnet. Das Leitrad 34 ist über eine Freilaufanordnung 38 auf einer Stützhohlwelle 40 in einer Richtung um die Drehachse A drehbar getragen.

Im Innenraum 26 ist eine allgemein mit 42 bezeichnete Drehschwingungsdämpfungsanordnung vorgesehen. Diese liegt im Drehmomentübertragungsweg zwischen dem Gehäuse 12 und einem Abtriebsorgan 44, beispielsweise einer Turbinenradnabe. Die Drehschwingungsdämpfungsanordnung dient dazu, durch Aufteilung des vom Gehäuse 12 aufgenommenen und an das Abtriebsorgan 44 weiter zu leitenden Drehmoments in zwei Drehmomentübertragungswege 46, 48 und durch Zusammenführung der über die beiden Drehmomentübertragungswege 46, 48 geleiteten Drehmomentenanteile an einer Kopplungsanordnung 50 Drehungleichförmigkeiten, also beispielsweise Drehmomentschwingungen oder Schwankungen, zu mindern bzw. im Idealfalle vollständig zu eliminieren.

Die Drehschwingungsdämpfungsanordnung 42 umfasst dabei einen Eingangsbereich 52, welcher das in das Gehäuse 12 eingeleitete Drehmoment über eine Überbrückungskupplung 54 aufnimmt. Diese Überbrückungskupplung 54 ist also dem Eingangsbereich 52 der Drehschwingungsdämpfungsanordnung 42 zugeordnet und wirkt zwischen diesem und der Gehäuseanordnung 12. Es sei darauf hingewiesen, dass die Überbrückungskupplung 54 in an sich bekannter Weise mit einem Kupplungskolben aufgebaut sein kann, der entweder direkt gegen das Gehäuse 12 gepresst werden kann oder gegen miteinander in Reibwechselwirkung bringbare ringscheibenartige Reibelemente.

Im Eingangsbereich 52 zweigen sich die beiden Drehmomentübertragungswege 46, 48 auf. Der erste Drehmomentübertragungsweg 46 davon umfasst eine Phasenschieberanordnung 56, welche bewirkt, dass das über diesen ersten Drehmomentübertagungsweg 46 geleitete Drehmoment eine Phasenverschiebung bezüglich des über den zweiten Drehmomentübertragungsweg 48 geleiteten Drehmoments erfährt.

Die Phasenschieberanordnung 56 umfasst einen Torsionsschwingungsdämpfer 58 mit einer Primärseite 60, einer Sekundärseite 62 und einer einer Relativdrehung zwischen der Primärseite 60 und der Sekundärseite 62 entgegenwirkenden Federeinheit 64. Es sei hier darauf hingewiesen, dass der Torsionsschwingungsdämpfer von herkömmlichem Aufbau sein kann und beispielsweise als Primärseite eine Nabenscheibe und als Sekundärseite zwei beidseits davon liegende und miteinander fest verbundene Deckscheibenelemente umfassen kann. Die Federeinheit 64 kann mehrere in Umfangsrichtung aufeinander folgende Federn, vorzugsweise Schraubendruckfedern, umfassen, die sich an der Primärseite 60 und der Sekundärseite 62 abstützend eine Rückstellkraft derselben bezüglich einander in Richtung zu einer Neutralrelativdrehlage bewirken. Der Torsionsschwingungsdämpfer 58 stellt also in dem in Fig. 1 dargestellten Ausgestaltungsbeispiel im Wesentlichen ein Schwingungssystem 66 bereit, welches im ersten Drehmomentübertragungsweg 46 zu einer Phasenverschiebung von darüber übertragenen Drehungleichförmigkeiten bzw. Drehmomentschwingungen führt. Dieses Schwingungssystem 66 weist bedingt durch die an der Primärseite und der Sekundärseite 62 vorhandenen Massen und die durch die Federeinheit 64 des Torsionsschwingungsdämpfers 58, welcher hier die Federanordnung des Schwingungssystems 66 bereitstellt, eine Eigenfrequenz bzw. Resonanzfrequenz auf. Bei Schwingungsanregungen unter dieser Eigenfrequenz werden zu übertragende Schwingungen im Wesentlichen ohne Phasenverschiebung übertragen. Wird die Resonanzfrequenz überschritten, tritt ein Phasensprung auf, der im Idealfalle und maximal 180° betragen kann, so dass anregende und weitergeleitete Schwingung zueinander gegenphasig verlaufen.

In der Kopplungsanordnung 50 werden die über die beiden Drehmomentübertragungswege 46, 48 geleiteten Drehmomente bzw. Drehmomentanteile wieder zusammengeführt. Hierzu ist die Kopplungsanordnung 50 als Planetengetriebeanordnung 68 ausgebildet und umfasst einen an den ersten Drehmomentübertragungsweg 48 angekoppelten Planetenradträger 70. Dieser trägt in Umfangsrichtung verteilt mehrere Planetenräder 72. Diese weisen zwei zueinander axial versetzt liegende Verzahnungen 74, 76 auf, die in dem in Fig. 1 dargestellten Ausgestaltungsbeispiel zueinander unterschiedliche Durchmesser bezogen auf die Rotationsachsen der Planetenräder 72 am Planetenradträger 70 aufweisen.

Ein erstes Sonnenrad 78 ist mit der Sekundärseite 62 des Torsionsschwingungsdämpfers 58 bzw. des Schwingungssystems 66 verbunden und steht in Kämmeingriff mit den Verzahnungen 74 der Planetenräder 72. Ein zweites Sonnenrad 80, welches im Wesentlichen auch einen Ausgangsbereich 82 der Drehschwingungsdämpfungsanordnung 46 bereitstellt, ist in Verzahnungseingriff mit den Verzahnungen 76 der Planetenräder 72.

Die Planetengetriebeanordnung 68 bewirkt durch Zusammenwirkung der auf dem Planetenradträger 70 grundsätzlich frei drehbar getragenen Planetenräder 72 mit den beiden Sonnenrädern 78, 80 eine Zusammenführung der über die beiden Drehmomentübertragungswege 46, 48 geleiteten Drehmomente. Enthalten diese Drehmomente Schwingungsanteile und ist die Frequenz dieser Schwingungs- bzw. Schwankungsanteile unter der Resonanzfrequenz des Schwingungssystems 66, so werden die beiden Drehmomente bzw. Drehmomentanteile in der Kopplungsanordnung 50 phasengleich zusammengeführt bzw. überlagert. Das in den Ausgangsbereich 82 weitergeleitete Drehmoment entspricht somit auch hinsichtlich seines Schwankungsverlaufs näherungsweise dem im Eingangsbereich 52 von der Überbrückungskupplung 54 aufgenommenen Drehmoment.

Liegt die Frequenz der Schwingungsanteile jedoch über der Resonanzfrequenz des Schwingungssystems 66, hier also des Torsionsschwingungsdämpfers 58, so überlagern sich die beiden über die Drehmomentübertragungswege 46, 48 geleiteten Drehmomente mit ihren Schwingungsanteilen in der Kopplungsanordnung 50 destruktiv. Im Idealfalle, also bei einer Phasenverschiebung von 180°, kann hier eine vollständige Auslöschung der Schwingungsanteile erreicht werden, so dass das am Ausgangsbereich 82 aufgenommene Drehmoment einen im Wesentlichen geglätteten, zumindest aber deutlich schwingungsreduzierten Verlauf aufweist.

Um das Dämpfungsverhalten der Drehschwingungsdämfpungsanordnung 42 weiter beeinflussen zu können, kann beispielsweise der Sekundärseite 62 eine Zusatzmasse 84 zugeordnet sein, um somit die sekundärseitige Masse zu erhöhen und damit einen Einfluss auf die Resonanzfrequenz zu nehmen. Ferner kann dem Schwingungssystem 66 eine allgemein mit 85 bezeichnete Reibungsdämpfungsanordnung zugeordnet sein, die beispielsweise parallel zu der Federeinheit 64 zwischen der Primärseite 60 und der Sekundärseite 62 wirken kann und als Coulombsche Reibeinrichtung oder als Fluidreibeinrichtung ausgebildet sein kann. Das Bereitstellen einer derartigen parallel zur Federeinheit 64 wirksamen Reibungsdämpfungsanordnung 85 beeinflusst im Wesentlichen auch die Größe der durch Schwingungssystem 66 eingeführten Phasenverschiebung.

Das Turbinenrad 28 ist zusammen mit der Sekundärseite 62 des Torsionsschwingungsdämpfers 58 an das Sonnenrad 78 angekoppelt. Es trägt dabei zur Erhöhung der sekundärseitigen Masse des Torsionsschwingungsdämpfers 58 bei, was zu einem sehr guten Schwingungsdämpfungsverhalten führt.

Da das Turbinenrad 28 zur Erhöhung der sekundärseitigen Masse des Torsionsschwingungsdämpfers 58 beiträgt, kann ggf. auch auf das Vorsehen dieser Zusatzmasse 84 verzichtet werden.

Das Sonnenrad 78 ist zusammen mit dem Turbinenrad 28 über ein Lager 86 auf einer Getriebeeingangswelle 90 gelagert. Alternativ könnte diese Lagerung auch bezüglich des Ausgangsbereichs 82, also beisipelsweise am Sonnenrad 80 oder am Abtriebsorgan 44 vorgesehen sein.

Durch die Ausgestaltung des Torsionsschwingungsdämpfers 58, also die Masse an der Primärseite 60, die Masse an der Sekundärseite 62, die Steifigkeit der Federeinheit 64 und die ggf. die sekundärseitige Masse unterstützende Zusatzmasse 84 wird im Allgemeinen einen möglichst niedrige Eigenfrequenz des Schwingungssystems 66 angestrebt, um somit bereits bei vergleichsweise niedrigen Schwingungsanregungen, also bereits bei vergleichsweise niedriger Drehzahl, den Übergang in den überkritischen, also mit Phasenverschiebung arbeitenden Betriebszustand zu erlangen.

Dadurch, dass die beiden Verzahnungen 74, 76 zueinander unterschiedliche Durchmesser aufweisen, mithin also auch die beiden Sonnenräder 78, 80 zueinander unterschiedliche Hohlräder aufweisen, wird es möglich, einen Einfluss auf die Verteilung der Drehmomente auf die beiden Drehmomentübertragungswege 46, 48 zu nehmen. Je näher die Durchmesser der Sonnenräder 78, 80, somit also auch die Durchmesser der Verzahnungen 74, 76 beieinander liegen, desto gleichmäßiger sind die Anteile der über die beiden Drehmomentübertragungswege 46, 48 geleiteten Drehmomente. Bei dem in der Fig. 1 dargestellten Ausgestaltungsbeispiel mit größerem Durchmesser der Verzahnung 74, welche mit dem Sonnenrad 78 zusammenwirkt, wird ein Übersetzungsverhältnis erreicht, das unter 1 liegt, bei umgekehrtem Größenverhältnis wird ein Übersetzungsverhältnis erreicht, das über 1 liegt. In ersterem Falle wird das über den ersten Drehmomentübertragungsweg 46 geleitete Drehmoment unter Ausnutzung einer Drehmomentflussumkehr im zweiten Drehmomentübertragungsweg 48 erhöht, und zwar unter Abstützung an der Kopplungsanordnung 50. Auch hierbei wird im Sinne der Erfindung eine destruktive Überlagerung der beiden Drehmomentflüsse in den Drehmomentübertragungswegen genutzt, um am Ausgangsbereich 82 ein im Wesentlichen geglättetes Gesamtdrehmoment zu erhalten. Im zweiteren Falle, also bei größerer Verzahnung 76 und kleinerer Verzahnung 74, teilt sich entsprechend den Größenverhältnissen das am Eingangsbereich 52 eingeleitete Drehmoment so auf, dass in beiden Drehmomentübertragungswegen 46, 48 ein Drehmomentenfluss der gleichen Richtung erfolgt und die beiden in gleicher Richtung geleiteten Drehmomentanteile in der Kopplungseinrichtung 50 einander überlagert werden.

Die Fig. 2 zeigt eine konstruktive Ausführung des in Fig. 1 prinzipiell dargestellten Aufbaus einer Kopplungseinrichtung 10. Man erkennt das Gehäuse 12 mit einer dem Antriebsaggregat zugewandt zu positionierenden Gehäuseschale 92 und einer dem Getriebe zugewandt zu positionierenden Gehäuseschale 94, an welcher auch die Pumpennabe 22 vorgesehen ist. Zwischen den beiden Gehäuseschalen 92, 94 ist ein ringartiges Verbindungsgehäuseelement 96 vorgesehen.

Die Überbrückungskupplung 54 umfasst einen durch Fluiddruck bewegbaren Kupplungskolben 98, welcher eine Mehrzahl von mit dem Gehäuse 12 drehbaren ringscheibenartigen Reibelementen und mit einem Reibelemententräger 100 drehbaren ringscheibenartigen Reibelementen zur Herstellung des Einrückzustands gegeneinander pressen kann. Der Reibelemententräger 100 bildet gleichzeitig auch den Planetenradträger 70 des zweiten Drehmomentübertragungswegs 48.

An den radial äußeren Bereich des Reibelemententrägers 100 ist ein Verbindungselement 102 fest angebunden, welches zur Primärseite 60 des Torsionsschwingungsdämpfers 58 bzw. des Schwingungssystems 66 führt. Diese Primärseite umfasst ein Zentralscheibenelement. Die Sekundärseite 62 umfasst zwei Deckscheibenelemente, von welchen das rechte, also das der Gehäuseschale 94 zugewandte, die Federn der Federeinheit 64 in deren Umfangsrichtung umgreifen kann und im radial inneren Bereich mit der Turbinenradschale 30 beispielsweise durch Vernietung fest verbunden ist. Das der Gehäuseschale 92 zugewandte Deckscheibenelement der Sekundärseite 62 greift nach radial innen und bildet dort das Sonnenrad 78, welches mit der Verzahnung 74 mit größerem Durchmesser der Planetenräder 72 zusammenwirkt. Die hier mit kleinerem Durchmesser ausgebildete Verzahnung 76 der Planetenräder 72 wirkt mit dem abtriebsseitigen Sonnenrad 80 zusammen, das hier mit dem Abtriebsorgan 44, also der Turbinenradnabe, integral ausgebildet ist.

Es sei darauf hingewiesen, dass in Fig. 2 das gezeigte Planetenrad 72 zweiteilig ausgebildet ist, wobei ein erster Zahnradteil mit größerem Durchmesser die Verzahnung 74 bereitstellt und ein mit dem ersten Zahnradteil fest drehbar verbundener zweiter Zahnradteil die Verzahnung 76 bereitstellt. Diese beiden Zahnradteile können selbstverständlich aber auch integral ausgeführt sein. Weiter sind die Planetenräder 72 am Planetenradträger 70 über dort vorgesehene Trägerbolzen und Lagerungen axial und radial gelagert und um deren Zentralachse drehbar.

Die Primärseite 60 des Torsionsschwingungsdämpfers 58 ist radial innen über das Lager 86 auf dem Abtriebsorgan 44 drehbar gelagert.

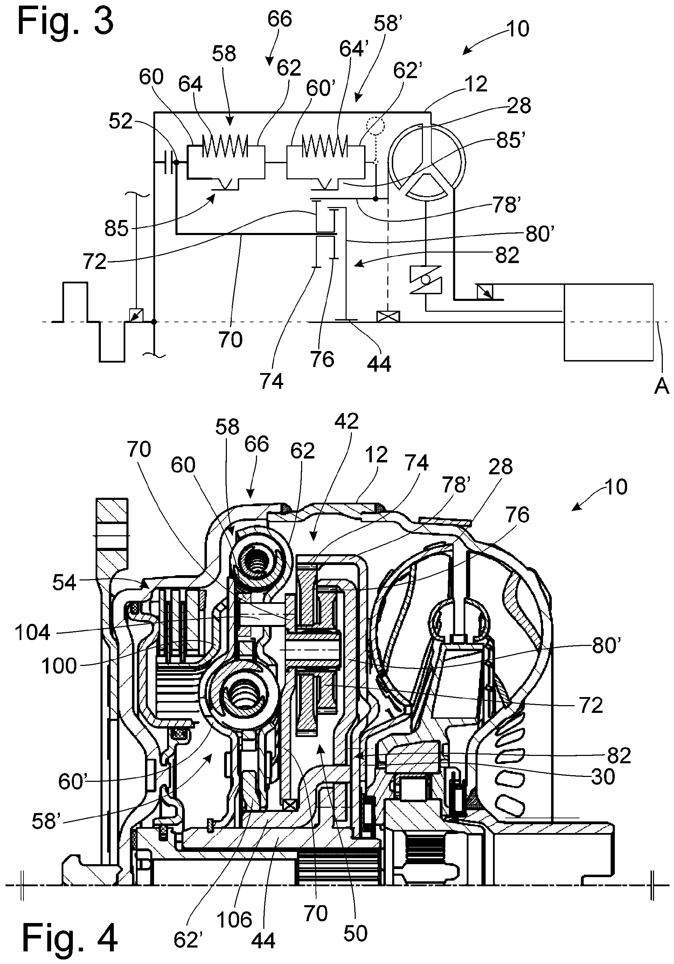

In Fig. 3 ist eine alternative Ausgestaltungsart dargestellt. Man erkennt, dass das Schwingungssystem 66 hier mit zwei seriell wirksamen Torsionsschwingungsdämpfern 58, 58' ausgebildet ist. Die Sekundärseite 62 des Torsionsschwingungsdämpfers 58 ist an die Primärseite 60' des Torsionsschwingungsdämpfers 58' angekoppelt. Dessen Sekundärseite 62' ist gegen die Wirkung der Federn einer Federeinheit 64' bezüglich der Primärseite 60' um die Drehachse A in begrenztem Drehwinkelbereich drehbar. Diese Sekundärseite 62' ist zusammen mit dem Turbinenrad 28 an ein nunmehr als Hohlrad 78' ausgebildetes Koppelrad zur Zusammenwirkung mit den Planetenrädern 72 angebunden. Das abtriebsseitige Koppelrad, hier ebenfalls als Hohlrad 80' ausgebildet, ist an das Abtriebsorgan 44 angebunden.

Jedem der beiden Torsionsschwingungsdämpfer 58, 58' kann eine Reibungsdämpfungsanordnung 85, 85' zugeordnet sein, um das Dämpfungsverhalten und insbesondere die Art des Phasenübergangs vom unterkritischen in den überkritischen Zustand beeinflussen zu können.

Zum Erhalt einer Parallelschaltung der beiden Torsionsschwingungsdämpfer 58, 58' können deren Primärseiten 60, 60' einerseits und Sekundärseiten 62, 62' andererseits miteinander gekoppelt werden, so dass die Federeinheiten 64, 64' parallel wirken.

Konstruktive Ausführungen zu diesem Aufbauprinzip sind in den Fig. 4 bis 6 dargestellt. Man erkennt in Fig. 4 wieder den Reibelemententräger 100, welcher an die hier als Zentralscheibenelement ausgebildete Primärseite 60 des Torsionsschwingungsdämpfers 58 angebunden ist. Mit diesem Zentralscheibenelement ist über einen oder mehrere Verbindungsstifte 104 der Planetenradträger 70 fest verbunden. Der Reibelemententräger 100 bildet zusammen mit dem Zentralscheibenelement der Primärseite 60 im Wesentlichen also auch denjenigen Bereich, in welchem eine Aufzweigung in die beiden Drehmomentübertragungswege stattfindet, also auch den Eingangsbereich der Drehschwingungsdämpfungsanordnung 42.

Die Sekundärseite 62 des Torsionsschwingungsdämpfers 58 umfasst den radial äußeren Bereich zweier in Abstand zueinander angeordneter und miteinander fest verbundener Deckscheibenelemente. Deren radial innerer Bereich bildet die Primärseite 60' des zweiten Torsionsschwingungsdämpfers 58' des Schwingungssystems 66. Ein innerhalb des Zentralscheibenelements der Primärseite 60 des Torsionsschwingungsdämpfers 58 liegendes weiteres Zentralscheibenelement bildet im Wesentlichen die Sekundärseite 62' des Torsionsschwingungsdämpfers 58' und ist in seinem radial inneren Bereich an einem Verbindungselement 106 beispielsweise durch Verschweißung festgelegt. Man erkennt also, dass die beiden Torsionsschwingungsdämpfer 58, 58' des Schwingungssystems 66 hier radial ineinander geschachtelt angeordnet sind und näherungsweise auf gleichem axialen Niveau liegen. Die Ineinanderschachtelung der Hohlräder 78', 80' ermöglicht es, diese von einer Seite her heranzuführen bzw. auf die Planetenräder 72 aufzustecken, was den Zusammenbau vereinfacht. Hierzu kann auch beitragen, dass das Hohlrad 78' mit dem Verbindungselement 106 beispielsweise durch eine Steckverzahnung verbunden ist. Unmittelbar neben diesen beiden Torsionsschwingungsdämpfern 58, 58' liegt die Kopplungseinrichtung 50 mit den am Planetenradträger 70 getragenen Planetenrädern 72, so dass hier eine axial sehr kompakte Bauweise geschaffen werden kann. An der anderen Seite der beiden radial gestaffelt liegenden Torsionsschwingungsdämpfer 58, 58' liegt die Überbrückungskupplung 54, so dass hier eine axiale Abfolge von Überbrückungskupplung, zwei radial gestaffelten Torsionsschwingungsdämpfern und Kopplungseinrichtung erzeugt ist.

Das Verbindungselement 106 durchgreift langlochartige Öffnungen im Hohlrad 80', so dass eine Relativdrehung zwischen diesem dem Ausgangsbereich 82 zuzurechnenden Hohlrad 80' und dem der Sekundärseite des Schwingungssystems 66, welche hier bereitgestellt ist durch die Sekundärseite 62' des Torsionsschwingungsdämpfers 58, zu ermöglichen. Das Verbindungselement 106 ist weiterhin an das Hohlrad 78 angebunden, welches in Kämmeingriff mit den Planetenrädern 72, hier der Verzahnung 74 mit größerem Durchmesser, steht, so dass hier eine auch ineinander geschachtelte Positionierung der beiden als Koppelrädern wirksamen Hohlräder 78', 80' erreicht ist.

Das Turbinenrad 28 ist mit seiner Turbinenradschale 30 an das Hohlrad 78 und somit auch die Sekundärseite 62' des Torsionsschwingungsdämpfers 58, d. h. des Schwingungssystems 66, angebunden, beispielsweise durch Verschweißung. Um den Hindurchgriff des Verbindungselements 106 durch das Hohlrad 80' zu erleichtern, könnte dieses Hohlrad 80' auch segmentartig ausgebildet sein, jeweils mit einem Segment dort, wo in einem Umfangsbereich auch ein Planetenrad 72 positioniert ist, zwischen derartigen Segmenten können dann entsprechende Abschnitte des Verbindungselements 106 axial hindurchgreifen. Dies ist möglich, da zwischen dem Hohlrad 80', also der Ausgangsseite 82, und dem Planetenradträger 70, also auch den Planetenrädern 72, nur eine begrenzte Umfangsverdrehung in oszillierender Weise stattfinden wird, welche im Wesentlichen auch korrespondiert mit der Umfangsrelativbewegung zwischen der Primärseite 60 des Torsionsschwingungsdämpfers 58 und der Sekundärseite 62' des Torsionsschwingungsdämpfers 58', welche also der Primärseite und der Sekundärseite des Schwingungssystems 66 entsprechen bzw. diese bereitstellen.

Eine Drehwinkelbegrenzung für die beiden Torsionsschwingungsdämpfer 58, 58' kann jeweils bereitgestellt sein durch die die beiden Deckscheibenelemente verbindenden Nietelemente bzw. auch die den Planetenradträger 70 mit dem Zentralscheibenelement, also der Primärseite 60 des Torsionsschwingungsdämpfers 58 verbindenden und zumindest eines der Deckscheibenelemente durchgreifenden Stifte 104. Auf diese Art und Weise kann verhindert werden, dass die Federn der Federeinheiten der beiden Torsionsschwingungsdämpfer 58, 58' bei übermäßig starker Belastung auf Block gesetzt werden, also vollständig komprimiert werden.

Eine radiale Zentrierung der beiden Torsionsschwingungsdämpfer 58, 58' kann dadurch erreicht werden, dass eines der Deckscheibenelemente, hier das linke, in seinem radial inneren Bereich auf dem Abtriebsorgan 44 drehbar gelagert und beispielsweise auch axial abgestützt ist. Weiterhin kann das Hohlrad 78 in seinem radial inneren Bereich am Abtriebsorgan 44 axial oder/und radial abgestützt bzw. gelagert sein. Hierzu kann beispielsweise eine Gleitlagerung eingesetzt werden.

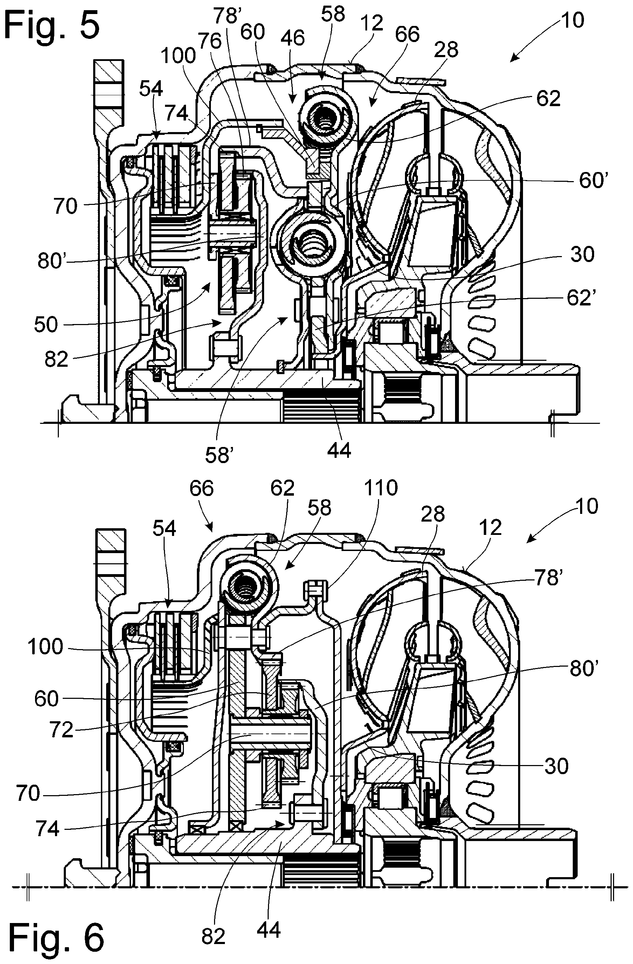

Bei der in Fig. 5 dargestellten konstruktiven Ausführung ist die axiale Relativpositionierung der beiden Torsionsschwingungsdämpfer 58, 58', welche hier weiterhin radial zueinander gestaffelt liegen, und der Kopplungseinrichtung 50, also der Planetengetriebeanordnung, vertauscht, so dass diese nunmehr axial zwischen der Überbrückungskupplung 54 und dem Schwingungssystem 66 positioniert ist. Der Reibelemententräger 100, welcher zur Bereitstellung des ersten Drehmomentübertragungswegs 46 an das Zentralscheibenelement der Primärseite 60 des Torsionsschwingungsdämpfers 58 angebunden ist, ist gleichzeitig auch mit dem Planetenradträger 70 des zweiten Drehmomentübertragungswegs 46 verbunden bzw. kann mit diesem auch integral ausgebildet sein. Das Hohlrad 78' ist mit dem Zentralscheibenelement der Sekundärseite 62' des radial inneren Torsionsschwingungsdämpfers verbunden und durchgreift hierzu das der Überbrückungskupplung 24 zugewandt positionierte der beiden Deckscheibenelemente im Bereich radial zwischen den beiden Federeinheiten der Torsionsschwingungsdämpfer 58, 58'.

Zwischen dem Reibelemententräger 100 und dem Zentralscheibenelement bzw. der Primärseite 60 des Torsionsschwingungsdämpfers 58 ist eine Steckverbindung durch axial ineinander eingesteckte Verzahnungen hergestellt, wozu am Zentralscheibenelement bzw. der Primärseite 60 ein entsprechend axial abstehender Steckverbindungsansatz vorgesehen ist, mit welchem der Reibelemententräger axial in Steckverbindung gebracht werden kann. Der Reibelemententräger könnte alternativ auch direkt an das Zentralscheibenelement z. B. durch Steckverbindung, Vernietung oder materialschlüssig eingebunden sein.

Das Turbinenrad 28 ist mit seiner Turbinenradschale 30 im radial inneren Bereich mit den Zentralscheibenelement der Sekundärseite 62' des radial inneren Torsionsschwingungsdämpfers 58' beispielsweise durch Steckverzahnung drehfest gekoppelt.

Bei der in Fig. 6 gezeigten Ausgestaltungsvariante weist das Schwingungssystem 66 nur einen Torsionsschwingungsdämpfer 58 auf, dessen Primärseite 60, hier als Zentralscheibenelement ausgebildet und auf dem Abtriebsorgan 44 gelagert, mit dem Reibelemententräger 100 zur gemeinsamen Drehung gekoppelt ist. Die mit zwei Deckscheibenelementen ausgebildete Sekundärseite 62 des Torsionsschwingungsdämpfers 58 bildet mit einem dieser beiden Deckscheibenelemente das Hohlrad 78', welches in Kämmeingriff mit der Verzahnung 74 der Planetenräder 72 steht. Durch die die beiden Deckscheibenelemente miteinander verbindenden Nietbolzen ist eine das Turbinenrad 28 tragende Verbindungsbaugruppe 110 an die Sekundärseite des Torsionsschwingungsdämpfers 58 angekoppelt.

Das abtriebsseitige bzw. ausgangsseitige Hohlrad 80' ist in seinem radial inneren Bereich beispielsweise durch Vernietung mit dem Abtriebsorgan 44 fest verbunden, könnte mit diesem aber auch integral ausgebildet sein.

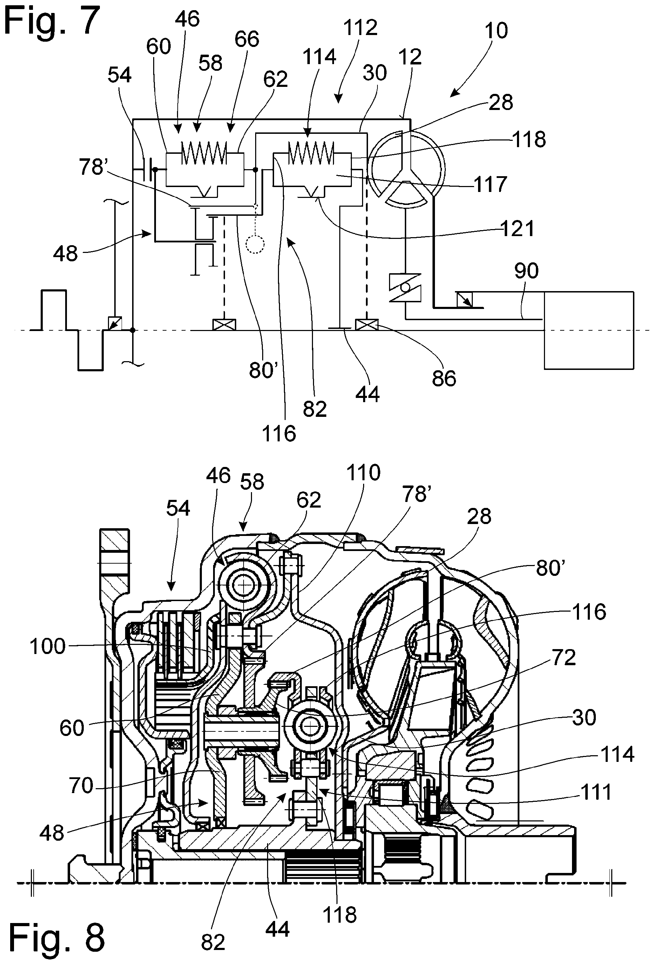

In Fig. 7 ist eine Kopplungseinrichtung 10 gezeigt, bei welcher dem Ausgangsbereich 82 ein weiteres Schwingungssystem 112 mit einem Torsionsschwingungsdämpfer 114 zugeordnet ist. Dieser umfasst eine an das Hohlrad 80' angekoppelte Primärseite 116 und eine mit dem Abtriebsorgan 44 gekoppelte Sekundärseite 118. Dazwischen wirkt eine mit mehreren Federn bzw. Federgruppen ausgebildete Federeinheit 117. Weiter kann zwischen der Primärseite und der Sekundärseite eine Reibungsdämpfungsanordnung 121 wirken.

Das weitere Schwingungssystem 112 wirkt auch dann zwischen dem Turbinenrad 28 und dem Abtriebsorgan 44, wenn die Überbrückungskupplung 54 ausgerückt ist. In diesem Zustand kann das Schwingungssystem 66 bzw. dessen Torsionsschwingungsdämpfer 58 nach Art eines Festfrequenztilgers frei schwingen, überträgt in diesem Zustand also kein Drehmoment.

Das Turbinenrad kann zusammen mit der Sekundärseite 62 des Torsionsschwingungsdämpfers 58 über das Lager 86 auf der Getriebeeingangswelle 90 oder dem Abtriebsorgan 44 gelagert sein.

Eine konstruktive Ausführung dieses Aufbauprinzips ist in Fig. 8 gezeigt. Man erkennt im Drehmomentenfluss folgend auf die Überbrückungskupplung bzw. den Reibelemententräger 100 den Torsionsschwingungsdämpfer 58, dessen als Zentralscheibenelement ausgebildete Primärseite 60 mit dem Reibelemententräger 100 gekoppelt ist und in seinem radial inneren Bereich den Planetenradträger 70 des zweiten Drehmomentübertragungswegs 48 bereitstellt. Daran sind die Planetenräder 72 um jeweilige Drehachsen drehbar getragen. Mit den die beiden Deckscheibenelemente der Sekundärseite 62 des Torsionsschwingungsdämpfers 58 verbindenden Nietbolzen ist eine Verbindungselementenanordnung 110 an die Sekundärseite 62 angebunden, wobei an dieser Verbindungselementenanordnung 100 das Turbinenrad 28 getragen ist und auf diese Art und Weise in den ersten Drehmomentübertragungsweg 46 eingekoppelt ist.

Das dem Turbinenrad 28 zugewandte Deckscheibenelement der Sekundärseite 62 bildet radial innen das Hohlrad 78'. Das ausgangsseitige Hohlrad 80' ist durch eines der Deckscheibenelemente der Primärseite 116 des Torsionsschwingungsdämpfers 114 des weiteren Schwingungssystems 112 bereitgestellt. Ein Zentralscheibenelement der Sekundärseite 118 des Torsionsschwingungsdämpfers 114 ist durch Vernietung oder beispielsweise durch integrale Ausgestaltung an das Abtriebsorgan 44 angekoppelt.

Aufgrund dieser konstruktiven Ausführung ist die ausgangsseitige Masse, also die Masse an der Sekundärseite 118 des weiteren Schwingungssystems 112, sehr nieder gehalten, was das Schwingungsdämpfungsverhalten vorteilhaft beeinflusst.

Das Turbinenrad 28 kann zusammen mit der Verbindungselementenanordnung 110 durch ein Axial/Radial-Lager bezüglich des Abtriebsorgans 44 gelagert sein. Auch die den Planetenradträger 70 bereitstellende Primärseite 60 des Torsionsschwingungsdämpfers 58 und die Sekundärseite 62 desselben können über jeweilige Lager auf dem Abtriebsorgan 44 drehbar gelagert sein.

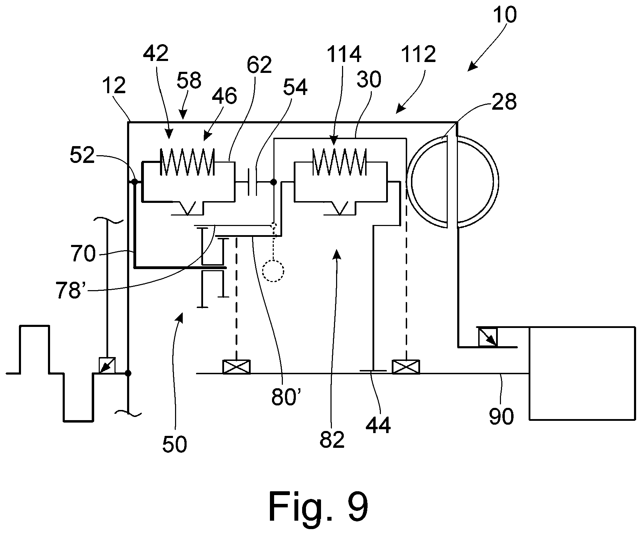

In Fig. 9 ist eine Kupplungseinrichtung 10 gezeigt, bei welcher der Eingangsbereich 52 der Drehschwingungsdämpfungsanordnung 42 fest an das Gehäuse 12 angekoppelt ist. Die Überbrückungskupplung 54 ist hier in den ersten Drehmomentübertragungsweg 46 integriert und liegt zwischen der Sekundärseite 62 des Torsionsschwingungsdämpfers 58 und dem Hohlrad 78, an welches auch das Turbinenrad 28 angebunden ist. Das Hohlrad 80' ist über den Torsionsschwingungsdämpfer 114 des weiteren Schwingungssystems 112 an das Abtriebsorgan angekoppelt. Das Turbinenrad 112 und auch das Hohlrad 80' können über jeweilige Lagerungen, beispielsweise ausgebildet als Wälzkörperlagerungen oder Gleitlagerungen, auf der Getriebeeingangswelle 90 drehbar gelagert sein. Alternativ könnte jedoch eine Lagerung bezüglich des Gehäuses 12 vorgesehen sein.

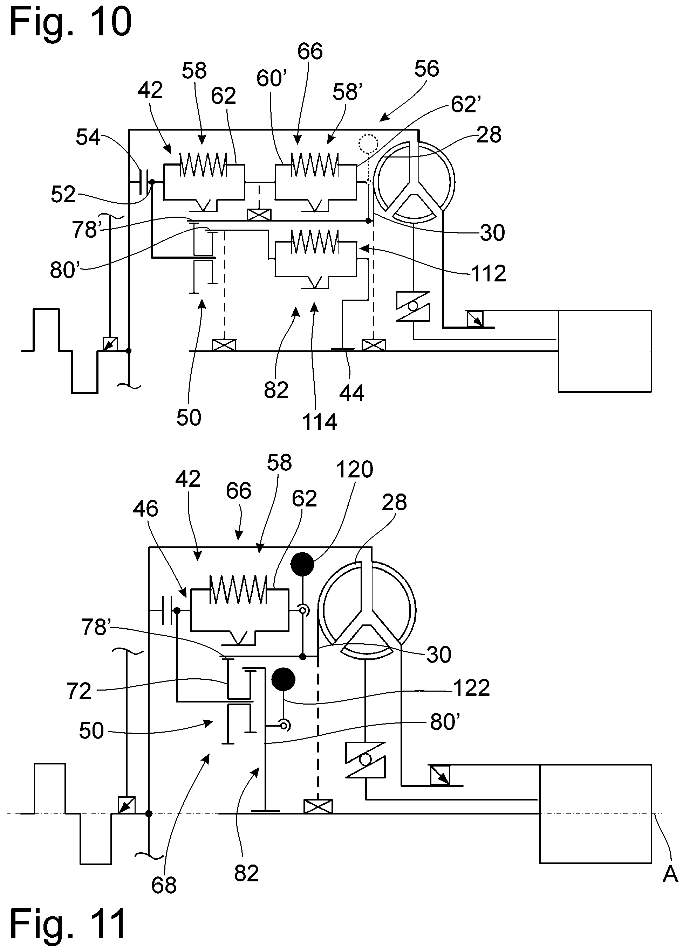

Die Fig. 10 zeigt eine Ausgestaltungsvariante, bei welcher das Schwingungssystem 66 der Drehschwingungsdämpfungsanordnung 42 bzw. der Phasenschieberanordnung 56 zwei seriell wirksame Torsionsschwingungsdämpfer 58, 58' aufweist. An die Sekundärseite 62' des Torsionsschwingungsdämpfers 58', also die Sekundärseite des Schwingungssystems 66 ist das Turbinenrad 28 angekoppelt. Im Ausgangsbereich 82 der Drehschwingungsdämpfungsanordnung 42 ist das weitere Schwingungssystem 112 mit seinem Torsionsschwingungsdämpfer 114 angeordnet und stellt eine Drehmomentübertragungsverbindung zum Abtriebsorgan 44 bereit.

Die Fig. 11 zeigt einen Aufbau, welcher im Wesentlichen dem bereits mit Bezug auf die Fig. 1 beschriebenen Aufbau entspricht. Ein Unterschied besteht aber darin, dass als Koppelräder hier Hohlräder 78', 80' zur Zusammenwirkung mit den Planetenrädern 72 der Planetengetriebeanordnung 68 dienen. Das Turbinenrad 28 ist mit dem ersten Drehmomentübertragungsweg 46 zuzurechnenden Hohlrad 78' verbunden, ebenso wie mit der Sekundärseite 62 des Torsionsschwingungsdämpfers 58. An diese Sekundärseite 62 ist eine Schwingungsdämpfungsanordnung 120 angekoppelt. Diese kann drehzahladaptiv ausgebildet sein und eine oder mehrere Auslenkungsmassen umfassen, die entlang zugeordneter Auslenkungsbahnen in Umfangsrichtung um die Drehachse A auslenkbar sind. Diese Auslenkungsbahnen sind derart gekrümmt, dass sie einen Scheitelbereich aufweisen, in welchem sie den größten Abstand zur Drehachse A aufweisen. Bei Auslenkung aus diesem Scheitelbereich, hervorgerufen durch Drehbeschleunigungen, bewegen sich die Auslenkungsmassen dann entlang der zugeordneten Bahnen in Umfangsrichtung und nach radial innen auf die Drehachse zu, so dass sie dabei potentielle Energie aufnehmen.

Eine derartige Schwingungsdämpfungsanordnung kann durch Auswahl der Massen und der Krümmung der zugeordneten Auslenkungsbahnen auf Anregungsfrequenzen bzw. auch höhere Anregungsordnungen derselben ausgelegt werden. Beispielsweise kann bei einem Vierzylindermotor eine Auslegung auf die zweite Ordnung der Zündfrequenz oder aber auch auf die vierte Ordnung der Zündfrequenz erfolgen. Dabei kann eine Streuung in der konstruktiven Auslegung auf die jeweils anregende Ordnung gewüscht sein.

Alternativ oder zusätzlich ist es möglich, die Schwingungsdämpfungsanordnung mit einer oder mehreren gegen die Wirkung einer Rückstellfeder auslenkbaren Schwungmassen auszugestalten. Durch Auswahl der Steifigkeit dieser Feder/Federn bzw. der bewegbaren Massen kann eine Abstimmung auf anregende Frequenzen erfolgen.

Eine derartige weitere Schwingungsdämpfungsanordnung, also beispielsweise bereitgestellt durch eine oder mehrere entgegen einer Federkraft auslenkbare Massen oder entlang jeweiliger Auslenkungsbahnen bewegbarer Massen, kann auch am Ausgangsbereich 82 in Form einer Schwingungsdämpfungsanordnung 122 vorgesehen sein.

Von Bedeutung ist, dass derartige Schwingungsdämpfungsanordnungen zwar bei Auftreten von Drehungleichförmigkeiten zur Auslenkung jeweiliger sich bewegender Massen führen, selbst aber kein Drehmoment übertragen.

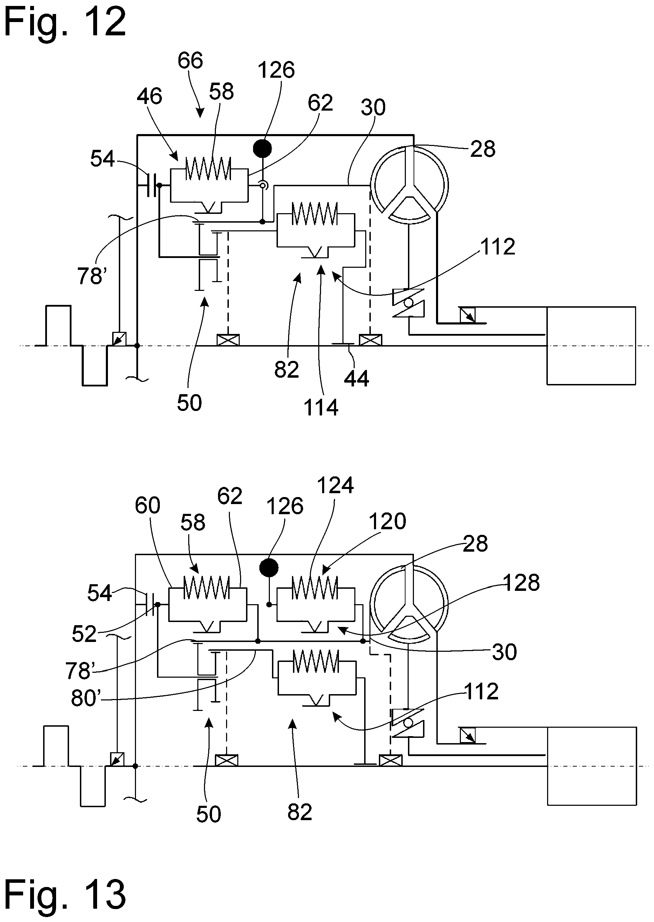

Die Fig. 12 zeigt die Verbindung des in Fig. 11 dargestellten Prinzips, also die Miteinbeziehung einer Schwingungsdämpfungsanordnung 120 in den ersten Drehmomentübertragungsweg 46, mit einem dem Ausgangsbereich 82 zugeordneten weiteren Schwingungssystem 112, beispielsweise mit einem Torsionsschwingungsdämpfer 114. Die Schwingungsdämpfungsanordnung 120 ist zusammen mit der Sekundärseite 62 des Torsionsschwingungsdämpfers 58 an das Hohlrad 78' angekoppelt, ebenso wie das Turbinenrad 28.

Bei der in Fig. 13 gezeigten Ausgestaltungsart ist die Schwingungsdämpfungsanordnung 120, welche ebenfalls zusammen mit dem Turbinenrad 28 an die Sekundärseite 62 des Torsionsschwingungsdämpfers 58 und mithin auch das Hohlrad 78' angekoppelt ist, als gegen die Wirkung einer Federeinheit 124 auslenkbare Masse 126 ausgebildet. Dabei kann die Federeinheit eine oder mehrere parallel oder/und seriell wirksame Federn und parallel dazu eine Reibungsdämpfungsanordnung 128 umfassen. Die Masse 126 kann ein oder mehrere Masseteile umfassen. Eine derartige mit einer gegen Federwirkung schwingbaren Masse ausgebildete Schwingungsdämpfungsanordnung kann auf eine anregende Frequenz als Festfrequenztilger abgestimmt werden, dient also auch hier nicht dazu, ein Drehmoment zu übertragen.

Die Feder oder Federn der Federeinheit 124 können als Schraubenfedern ausgebildet sein, können aber auch in Form von elastischem, beispielsweise gummiartigem Material, bereitgestellt sein.

Mit der Integration einer erfindungsgemäß wirksamen bzw. aufgebauten Drehschwingungsdämpfungsanordnung in den Drehmomentübertragungsweg zwischen einem Gehäuse und einem Abtriebsorgan in einer hydrodynamischen Kopplungseinrichtung werden in einen Antriebsstrang bei grundsätzlich einfachem Aufbau sehr stark schwingungsberuhigend wirksame Maßnahmen integriert, welche zu einem deutlich erhöhten Fahrkomfort beitragen. Die durch die phasenverschobene Überlagrung zweier Drehmomentenanteile des gesamt zu übertragenden Drehmoments erreichte destruktive Überlagerung von Schwingungsanteilen erreicht bei sehr kompakter Ausgestaltung ein Schwingungsdämpfungsniveau, welches ansonsten nur bei wesentlich größer dimensionierten Federdämpfern erreichbar wäre. Mit diesem deutlich verbesserten Schwingungsdämpfungsverhalten wird auch die Entstehung von Geräuschen im Antriebsstrang wesentlich reduziert. Aufgrund des deutlich geminderten Schwingungsanteils in dem in den Antriebsstrang eingeleiteten Drehmoment wird es weiterhin möglich, dass die Überbrückungskupplung bereits bei geringerer Drehzahl geschlossen werden kann, was einen energieeffizienteren Betrieb eines Fahrzeugs gestattet.

Es sei weiter darauf hingewiesen, dass die Erfindungsprinzipien selbstverständlich auch Anwendung finden können, wenn die Kopplungseinrichtung ohne Leitrad ausgebildet ist. In diesem Falle kann sie nicht die Funktionalität der Drehmomentwandlung im Sinne einer Drehmomentenerhöhung erfüllen, sondern ist als Fluidkupplung bzw. Strömungskupplung wirksam.

## Patentansprüche

1. Hydrodynamische Kopplungsanordnung, insbesondere Drehmomentwandler, umfassend eine mit Fluid gefüllte oder füllbare Gehäuseanordnung (12), ein mit der Gehäuseanordnung (12) um eine Drehachse (A) drehbares Pumpenrad (20), ein in der Gehäuseanordnung (12) angeordnetes und mit einem Abtriebsorgan (44) um die Drehachse (A) drehbares Turbinenrad (28), eine Überbrückungskupplung (54) zur Herstellung einer Drehmomentübertragungsverbindung zwischen der Gehäuseanordnung (12) und dem Abtriebsorgan (44), eine Drehschwingungsdämpfungsanordnung (42) mit einem Eingangsbereich (52) und einem Ausgangsbereich (82), wobei zwischen dem Eingangsbereich (52) und dem Ausgangsbereich (82) ein erster Drehmomentübertragungsweg (46) und parallel dazu ein zweiter Drehmomentübertragungsweg (48) sowie eine Kopplungsanordnung (50) zur Überlagerung der über die Drehmomentübertragungswege (46, 48) geleiteten Drehmomente vorgesehen sind, wobei die Drehschwingungsdämpfungsanordnung (42) ferner wenigstens im ersten Drehmomentübertragungsweg (46) eine Phasenschieberanordnung (56) umfasst zur Erzeugung einer Phasenverschiebung von über den ersten Drehmomentübertragungsweg (46) geleiteten Drehungleichförmigkeiten bezüglich über den zweiten Drehmomentübertragungsweg geleiteten Drehungleichförmigkeiten, wobei die Kopplungsanordnung (50) eine Planetengetriebeanordnung (68) umfasst, wobei die Planetengetriebeanordnung (68) einen an den zweiten Drehmomentübertragungsweg (48) angebundenen Planetenradträger (70) mit einer Mehrzahl von daran drehbar getragenen Planetenrädern (72) umfasst,
**dadurch gekennzeichnet, dass** die Planetengetriebeanordnung (68) eine an den ersten Drehmomentübertragungsweg (46) angebundene erste Koppelradanordnung (78'; 78) in Kämmeingriff mit den Planetenrädern (72) und eine an den Ausgangsbereich (82) angebundene zweite Koppelradanordnung (80'; 80) in Kämmeingriff mit den Planetenrädern umfasst.

2. Hydrodynamische Kopplungseinrichtung nach Anspruch 1,
**dadurch gekennzeichnet, dass** die Phasenschieberanordnung (56) ein Schwingungssystem (66) mit einer Primärseite (60) und einer gegen die Wirkung einer Federanordnung (64; 64') bezüglich der Primärseite (60) um die Drehachse drehbaren Sekundärseite (62; 62') umfasst.

3. Hydrodynamische Kopplungseinrichtung nach Anspruch 1 oder 2,
**dadurch gekennzeichnet, dass** der Ausgangsbereich (82) ein weiteres Schwingungssystem (112) mit einer Primärseite (116) und einer gegen die Wirkung einer Federanordnung (117) bezüglich der Primärseite drehbaren Sekundärseite (118) umfasst.

4. Hydrodynamische Kopplungseinrichtung nach einem der Ansprüche 1 bis 3,
**dadurch gekennzeichnet, dass** das Turbinenrad (28) an einen der Drehmomentübertragungswege (46, 48) angekoppelt ist.

5. Hydrodynamische Kopplungseinrichtung nach Anspruch 4,
**dadurch gekennzeichnet, dass** das Turbinenrad (28) an den ersten Drehmomentübertragungsweg (46) angekoppelt ist.

6. Hydrodynamische Kopplungseinrichtung nach Anspruch 5,
**dadurch gekennzeichnet, dass** das Turbinenrad (28) mit der Sekundärseite (62') des Schwingungssystems (66) gekoppelt ist.

7. Hydrodynamische Kopplungseinrichtung nach einem der Ansprüche 1 bis 6,
**dadurch gekennzeichnet, dass** die Überbrückungskupplung (54) wirkungsmäßig in einem der Drehmomentübertragungswege (46, 48), vorzugsweise dem ersten Drehmomentübertragungsweg (46), angeordnet ist.

8. Hydrodynamische Kopplungseinrichtung nach einem der Ansprüche 1 bis 6,
**dadurch gekennzeichnet, dass** die Überbrückungskupplung (54) wirkungsmäßig im Ausgangsbereich (82) angeordnet ist.

9. Hydrodynamische Kopplungseinrichtung nach einem der Ansprüche 1 bis 6,
**dadurch gekennzeichnet, dass** die Überbrückungskupplung (54) wirkungsmäßig im Eingangsbereich (52) angeordnet ist.

10. Hydrodynamische Kopplungseinrichtung nach einem der Ansprüche 1 bis 9,
**dadurch gekennzeichnet, dass** die erste Koppelradanordnung (78'; 78) in Verbindung mit den Planetenrädern (72) und die zweite Koppelradanordnung (80'; 80) in Verbindung mit den Planetenrädern (72) zueinander gleiche Übersetzungsverhältnisse bereitstellen.

11. Hydrodynamische Kopplungseinrichtung nach einem der Ansprüche 1 bis 9,
**dadurch gekennzeichnet, dass** die erste Koppelradanordnung (78'; 78) in Verbindung mit den Planetenrädern (72) und die zweite Koppelradanordnung (80'; 80) in Verbindung mit den Planetenrädern (72) zueinander unterschiedliche Übersetzungsverhältnisse bereitstellen.

12. Hydrodynamische Kopplungseinrichtung nach einem der Ansprüche 1 bis 11,
**dadurch gekennzeichnet, dass** die erste Koppelradanordnung (78') und die zweite Koppelradanordnung (80') jeweils eine Hohlradanordnung (78', 80') umfassen.

13. Hydrodynamische Kopplungseinrichtung nach einem der Ansprüche 1 bis 11,
**dadurch gekennzeichnet, dass** die erste Koppelradanordnung (78) und die zweite Koppelradanordnung (80) jeweils eine Sonnenradanordnung (78, 80) umfasst.

14. Hydrodynamische Kopplungsanordnung nach einem der Ansprüche 2 bis 13,
**dadurch gekennzeichnet, dass** das Schwingungssystem (66) oder/und das weitere Schwingungssystem (112) wenigstens zwei zueinander seriell angeordnete Schwingungsdämpfer (58, 58') jeweils mit einer Primärseite (60, 60') und einer bezüglich dieser drehbaren Sekundärseite (62, 62') umfasst.

15. Hydrodynamische Kopplungseinrichtung nach einem der Ansprüche 2 bis 14,
**dadurch gekennzeichnet, dass** das Schwingungssystem (66) oder/und das weitere Schwingungssystem (112) wenigstens zwei zueinander parallel wirksame Schwingungsdämpfer jeweils mit einer Primärseite und einer bezüglich dieser drehbaren Sekundärseite umfasst.

16. Hydrodynamische Kopplungseinrichtung nach einem der Ansprüche 2 bis 15,
**dadurch gekennzeichnet, dass** das Schwingungssystem (66) oder/und das weitere Schwingungssystem (112) eine drehzahladaptive Schwingungsdämpfungsanordnung (120, 122) mit wenigstens einer in Umfangsrichtung aus einer Grundlage auslenkbaren und dabei ihren Abstand zur Drehachse (A) verändernde Auslenkungsmasse umfasst.

17. Hydrodynamische Kopplungseinrichtung nach einem der Ansprüche 2 bis 16,
**dadurch gekennzeichnet, dass** das Schwingungssystem (66) oder/und das weitere Schwingungssystem (112) eine Festfrequenz-Schwingungsdämpfungsanordnung (120, 120') wenigstens einer gegen die Wirkung einer Rückstellfederanordnung auslenkbaren Schwingungsmasse (126) umfasst.

18. Hydrodynamische Kopplungseinrichtung nach einem der Ansprüche 2 bis 17,
**dadurch gekennzeichnet, dass** dem Schwingungssystem (66) oder/und dem weiteren Schwingungssystem (112) eine einer Relativdrehung zwischen Primärseite (60) und Sekundärseite (62; 62') desselben entgegenwirkende Reibungsdämpfungsanodnung (85, 85', 121) zugeordnet ist.

## Claims

1. Hydrodynamic coupling arrangement, in particular torque converter, comprising a housing arrangement (12) which is filled or can be filled with fluid, a pump impeller (20) which can be rotated with the housing arrangement (12) about a rotational axis (A), a turbine wheel (28) which is arranged in the housing arrangement (12) and can be rotated with an output member (44) about the rotational axis (A), a lock-up clutch (54) for establishing a torque transmission connection between the housing arrangement (12) and the output member (44), a torsional vibration damping arrangement (42) with an input region (52) and an output region (82), a first torque transmission path (46) and, parallel thereto, a second torque transmission path (48) and a coupling arrangement (50) for superimposing the torques which are conducted via the torque transmission paths (46, 48) being provided between the input region (52) and the output region (82), the torsional vibration damping arrangement (42) comprising, furthermore, a phase shifter arrangement (56) at least in the first torque transmission path (46), for the generation of a phase shift of rotational non-uniformities which are conducted via the first torque transmission path (46) with regard to rotational non-uniformities which are conducted via the second torque transmission path, the coupling arrangement (50) comprising a planetary transmission arrangement (68), the planetary transmission arrangement (68) comprising a planetary gear carrier (70) which is attached to the second torque transmission path (48) and has a plurality of planetary gears (72) which are supported rotatably on the said planetary gear carrier (70), **characterized in that** the planetary gear arrangement (68) comprises a first coupling gear arrangement (78'; 78) which is attached to the first torque transmission path (46) and is in meshing engagement with the planetary gears (72), and a second coupling gear arrangement (80'; 80) which is attached to the output region (82) and is in meshing engagement with the planetary gears.

2. Hydrodynamic coupling device according to Claim 1, **characterized in that** the phase shifter arrangement (56) comprises a vibration system (66) with a primary side (60) and a secondary side (62; 62') which can be rotated about the rotational axis with regard to the primary side (60) counter to the action of a spring arrangement (64; 64').

3. Hydrodynamic coupling device according to Claim 1 or 2, **characterized in that** the output region (82) comprises a further vibration system (112) with a primary side (116) and a secondary side (118) which can be rotated with regard to the primary side counter to the action of a spring arrangement (117).

4. Hydrodynamic coupling device according to one of Claims 1 to 3, **characterized in that** the turbine wheel (28) is coupled to one of the torque transmission paths (46, 48).

5. Hydrodynamic coupling device according to Claim 4, **characterized in that** the turbine wheel (28) is coupled to the first torque transmission path (46).

6. Hydrodynamic coupling device according to Claim 5, **characterized in that** the turbine wheel (28) is coupled to the secondary side (62') of the vibration system (66).

7. Hydrodynamic coupling device according to one of Claims 1 to 6, **characterized in that** the lock-up clutch (54) is arranged in terms of action in one of the torque transmission paths (46, 48), preferably the first torque transmission path (46).

8. Hydrodynamic coupling device according to one of Claims 1 to 6, **characterized in that** the lock-up clutch (54) is arranged in terms of action in the output region (82) .

9. Hydrodynamic coupling device according to one of Claims 1 to 6, **characterized in that** the lock-up clutch (54) is arranged in terms of action in the input region (52) .

10. Hydrodynamic coupling device according to one of Claims 1 to 9, **characterized in that** the first coupling gear arrangement (78'; 78), in conjunction with the planetary gears (72), and the second coupling gear arrangement (80'; 80), in conjunction with the planetary gears (72), provide transmission ratios which are identical to one another.

11. Hydrodynamic coupling device according to one of Claims 1 to 9, **characterized in that** the first coupling gear arrangement (78'; 78), in conjunction with the planetary gears (72), and the second coupling gear arrangement (80'; 80), in conjunction with the planetary gears (72), provide transmission ratios which are different from one another.

12. Hydrodynamic coupling device according to one of Claims 1 to 11, **characterized in that** the first coupling gear arrangement (78') and the second coupling gear arrangement (80') in each case comprise an internal gear arrangement (78', 80').

13. Hydrodynamic coupling device according to one of Claims 1 to 11, **characterized in that** the first coupling gear arrangement (78) and the second coupling gear arrangement (80) in each case comprise a sun gear arrangement (78, 80).

14. Hydrodynamic coupling arrangement according to one of Claims 2 to 13, **characterized in that** the vibration system (66) and/or the further vibration system (112) comprise/comprises at least two vibration dampers (58, 58') which are arranged in series with one another and in each case have a primary side (60, 60') and a secondary side (62, 62') which can be rotated with regard to the said primary side (60, 60').

15. Hydrodynamic coupling device according to one of Claims 2 to 14, **characterized in that** the vibration system (66) and/or the further vibration system (112) comprise/comprises at least two vibration dampers which are active in parallel with one another and in each case have a primary side and a secondary side which can be rotated with regard to the said primary side.

16. Hydrodynamic coupling device according to one of Claims 2 to 15, **characterized in that** the vibration system (66) and/or the further vibration system (112) comprise/comprises an adaptive-speed vibration damping arrangement (120, 122) with at least one deflection mass which can be deflected in a circumferential direction out of a basic position and in the process changes its spacing from the rotational axis (A).

17. Hydrodynamic coupling device according to one of Claims 2 to 16, **characterized in that** the vibration system (66) and/or the further vibration system (112) comprise/comprises a fixed frequency vibration damping arrangement (120, 120') of at least one vibration mass (126) which can be deflected counter to the action of a restoring spring arrangement.

18. Hydrodynamic coupling device according to one of Claims 2 to 17, **characterized in that** the vibration system (66) and/or the further vibration system (112) are/is assigned a friction damping arrangement (85, 85', 121) which counteracts a relative rotation between the primary side (60) and the secondary side (62; 62') thereof.

## Revendications

1. Agencement de couplage hydrodynamique, en particulier convertisseur de couple, comprenant un agencement de boîtier (12) rempli ou pouvant être rempli de fluide, une roue de pompe (20) pouvant tourner autour d'un axe de rotation (A) avec l'agencement de boîtier (12), une roue de turbine (28) disposée dans l'agencement de boîtier (12) et pouvant tourner autour de l'axe de rotation (A) avec un organe de prise de force (44), un embrayage de pontage (54) pour établir une liaison de transfert de couple entre l'agencement de boîtier (12) et l'organe de prise de force (44), un agencement d'amortissement des oscillations de torsion (42) avec une région d'entrée (52) et une région de sortie (82), une première voie de transfert de couple (46), et parallèlement à celle-ci, une deuxième voie de transfert de couple (48), ainsi qu'un agencement d'accouplement (50) pour la superposition des couples dérivés par le biais des voies de transfert de couple (46, 48) étant prévus entre la région d'entrée (52) et la région de sortie (82), l'agencement d'amortissement des oscillations de torsion (42) comprenant en outre au moins dans la première voie de transfert de couple (46) un agencement de déphaseur (56) pour générer un déphasage des irrégularités de rotation dérivées par le biais de la première voie de transfert de couple (46) par rapport aux irrégularités de rotation dérivées par le biais de la deuxième voie de transfert de couple, l'agencement de couplage (50) comprenant un agencement d'engrenage planétaire (68), l'agencement d'engrenage planétaire (68) comprenant un porte-satellites (70) raccordé à la deuxième voie de transfert de couple (48) avec une pluralité de satellites (72) supportés à rotation sur celui-ci, **caractérisé en ce que** l'agencement d'engrenage planétaire (68) comprend un premier agencement de roue de couplage (78' ; 78) raccordé à la première voie de transfert de couple (46) en engagement d'engrènement avec les satellites (72) et un deuxième agencement de roue de couplage (80' ; 80) raccordé à la région de sortie (82) en engagement d'engrènement avec les satellites.

2. Dispositif de couplage hydrodynamique selon la revendication 1, **caractérisé en ce que** l'agencement de déphaseur (56) comprend un système d'oscillation (66) avec un côté primaire (60) et un côté secondaire (62 ; 62') pouvant tourner à l'encontre de l'action d'un agencement de ressort (64 ; 64') autour de l'axe de rotation par rapport au côté primaire (60).

3. Agencement de couplage hydrodynamique selon la revendication 1 ou 2, **caractérisé en ce que** la région de sortie (82) comprend un système d'oscillation supplémentaire (112) avec un côté primaire (116) et un côté secondaire (118) pouvant tourner par rapport au côté primaire à l'encontre de l'action d'un agencement de ressort (117).

4. Agencement de couplage hydrodynamique selon l'une quelconque des revendications 1 à 3, **caractérisé en ce que** la roue de turbine (28) est accouplée à l'une des voies de transfert de couple (46, 48).

5. Agencement de couplage hydrodynamique selon la revendication 4, **caractérisé en ce que** la roue de turbine (28) est accouplée à la première voie de transfert de couple (46).

6. Agencement de couplage hydrodynamique selon la revendication 5, **caractérisé en ce que** la roue de turbine (28) est accouplée au côté secondaire (62') du système d'oscillation (66).

7. Agencement de couplage hydrodynamique selon l'une quelconque des revendications 1 à 6, **caractérisé en ce que** l'embrayage de pontage (54) est disposé fonctionnellement dans l'une des voies de transfert de couple (46, 48), de préférence dans la première voie de transfert de couple (46).

8. Agencement de couplage hydrodynamique selon l'une quelconque des revendications 1 à 6, **caractérisé en ce que** l'embrayage de pontage (54) est disposé fonctionnellement dans la région de sortie (82).

9. Agencement de couplage hydrodynamique selon l'une quelconque des revendications 1 à 6, **caractérisé en ce que** l'embrayage de pontage (54) est disposé fonctionnellement dans la région d'entrée (52).

10. Agencement de couplage hydrodynamique selon l'une quelconque des revendications 1 à 9, **caractérisé en ce que** le premier agencement de roue de couplage (78' ; 78) en liaison avec les satellites (72) et le deuxième agencement de roue de couplage (80' ; 80) en liaison avec les satellites (72) fournissent des rapports de démultiplication identiques l'un à l'autre.

11. Agencement de couplage hydrodynamique selon l'une quelconque des revendications 1 à 9, **caractérisé en ce que** le premier agencement de roue de couplage (78' ; 78) en liaison avec les satellites (72) et le deuxième agencement de roue de couplage (80' ; 80) en liaison avec les satellites (72) fournissent des rapports de démultiplication différents l'un de l'autre.

12. Agencement de couplage hydrodynamique selon l'une quelconque des revendications 1 à 11, **caractérisé en ce que** le premier agencement de roue de couplage (78') et le deuxième agencement de roue de couplage (80') comprennent chacun un agencement de couronne (78', 80').

13. Agencement de couplage hydrodynamique selon l'une quelconque des revendications 1 à 11, **caractérisé en ce que** le premier agencement de roue de couplage (78) et le deuxième agencement de roue de couplage (80) comprennent chacun un agencement de roue solaire (78, 80).

14. Agencement de couplage hydrodynamique selon l'une quelconque des revendications 2 à 13, **caractérisé en ce que** le système d'oscillation (66) et/ou le système d'oscillation supplémentaire (112) comprennent au moins deux amortisseurs d'oscillations (58, 58') disposés en série l'un par rapport à l'autre avec à chaque fois un côté primaire (60, 60') et un côté secondaire (62, 62') pouvant tourner par rapport à celui-ci.

15. Agencement de couplage hydrodynamique selon l'une quelconque des revendications 2 à 14, **caractérisé en ce que** le système d'oscillation (66) et/ou le système d'oscillation supplémentaire (112) comprennent au moins deux amortisseurs d'oscillations agissant parallèlement l'un à l'autre, à chaque fois avec un côté primaire et un côté secondaire pouvant tourner par rapport à celui-ci.

16. Agencement de couplage hydrodynamique selon l'une quelconque des revendications 2 à 15, **caractérisé en ce que** le système d'oscillation (66) et/ou le système d'oscillation supplémentaire (112) comprennent un agencement d'amortissement d'oscillation (120, 122) à vitesse de rotation adaptative avec au moins une masse de déviation pouvant être déviée d'une position de base dans la direction périphérique et modifiant ainsi sa distance à l'axe de rotation (A).

17. Dispositif d'accouplement hydrodynamique selon l'une quelconque des revendications 2 à 16, **caractérisé en ce que** le système d'oscillation (66) et/ou le système d'oscillation supplémentaire (112) comprennent un agencement d'amortissement des oscillations à fréquence fixe (120, 120') d'au moins une masse oscillante (126) pouvant être déviée à l'encontre de l'action d'un agencement de ressort de rappel.

18. Agencement de couplage hydrodynamique selon l'une quelconque des revendications 2 à 17, **caractérisé en ce qu'**au système d'oscillation (66) et/ou au système d'oscillation supplémentaire (112) est associé un agencement d'amortissement de friction (85, 85', 121) agissant à l'encontre d'une rotation relative entre le côté primaire (60) et le côté secondaire (62 ; 62') de celui-ci.
